Europäisches Patentamt

European Patent Office

Office européen des brevets

(19)

(11) Veröffentlichungsnummer. **0 008 702**

A1

(12) **EUROPÄISCHE PATENTANMELDUNG**

(21) Anmeldenummer: 79102917.6

(22) Anmeldetag: 11.08.79

(51) Int. Cl.³: **F 16 K 1/14** •

(30) Priorität: 05.09.78 DE 2843152

(43) Veröffentlichungstag der Anmeldung:
19.03.80 Patentblatt 80/6

(84) Benannte Vertragsstaaten:
AT CH DE FR GB IT NL SE

(71) Anmelder: Ginzler, Peter
Kaiser-Friedrich-Ring 67
D-6200 Wiesbaden(DE)

(72) Erfinder: Ginzler, Peter
Kaiser-Friedrich-Ring 67
D-6200 Wiesbaden(DE)

(74) Vertreter: Weber, Dieter, Dr. et al,
Gustav-Freytag-Strasse 25
D-6200 Wiesbaden 1(DE)

(54) Vorrichtung zur Sperrung bzw. Freigabe des Durchflusses eines fliessfähigen Mediums.

(57) Eine Vorrichtung zum Sperren und Freigeben des Durchflusses eines gasförmigen oder flüssigen Mediums mittels einer Ventilkugel (1), die sich in einem kegel- oder kugelförmigen Ventilsitz (2)-(3) befindet, weist eine Auslösestange (4) auf, die relativ zum Ventilsitz bewegbar ist. Dier Längsachse der Auslösestange ist unter einem Winkel im Bereich von 20 bis 100° zur Fliessrichtung des gasförmigen oder flüssigen Mediums angeordnet.

Fig.1

EP 0 008 702 A1

Ing. grad. Peter Ginzler, Kaiser-
Friedrich-Ring 67, 6200 Wiesbaden

— — — — — — — — — — — — — — — — — — — —

Vorrichtung zur Sperrung bzw.
Freigabe des Durchflusses eines
fließfähigen Mediums

— — — — — — — — — — — — — — — — — — — —

Priorität: Deutsche Patentanmeldung P 28 43 152.9 vom 5. September 1978

— — — — — — — — — — — — — — — — — — — —

Die Erfindung betrifft eine Vorrichtung zur Sperrung
bzw. Freigabe des Durchflusses eines gasförmigen oder
flüssigen Mediums mittels einer Ventilkugel, die sich
in einem kegel- oder kugelförmigen Ventilsitz befindet

Postscheck: Frankfurt/Main 67 63-602        Bank: Dresdner Bank AG, Wiesbaden, Konto-Nr. 276 307

und von einer Auslösestange relativ zum Sitz bewegbar ist.

Derartige Vorrichtungen sind bekannt, wobei die Auslösestange in nachteiliger Weise in entgegengesetzter Richtung
zum beaufschlagen Druck wirkt. Die Kraft zum Abheben der
Ventilkugel vom Sitz kann daher einen gewissen Schwellwert
nicht unterschreiten. Dieser Schwellwert liegt aber so
hoch, daß die bekannten Ventile zwangsläufig groß aufgebaut sind, insbesondere einen großen und damit kräftigen
Antrieb haben.

Der Erfindung liegt dagegen die Aufgabe zugrunde, eine
Vorrichtung der eingangs beschriebenen Art zu schaffen,
die auch mit einer geringen Auslösekraft geöffnet und geschlossen werden kann.

Gemäß der Erfindung wird diese Aufgabe dadurch gelöst, daß
die Längsachse der Auslösestange unter einem Winkel im Bereich von etwa 20 bis 100$^o$, vorzugsweise 90$^o$, zur Durchflußrichtung des fließfähigen Mediums angeordnet ist. Bei
dem neuen Ventil braucht nur die statische Reibung überwunden zu werden. Es hat sich gezeigt, daß die Verschiebekraft, das Produkt von Normalkraft $N$ und Reibungskoeffizient $\mu$, durch die erfinderischen Maßnahmen auf 1/10 des
Wertes bei bisher bekannten Ventilen gesenkt werden kann.
Dies ist z.B. bei einer Ausführungsform gelungen, bei welcher durch Schweißen und Härten der Stahlelemente der Reibungskoeffizient $\mu$ auf einen Wert von kleiner als 0,1 gebracht wurde.

Das Ventil gemäß der Erfindung sperrt und öffnet in vorteilhafter Weise mit nur einer einzigen Ventilkugel sowohl
im Vorlauf als auch im Rücklauf. Das Ventil gemäß der Erfindung kann man daher sehr praktisch als steuerbare Rohrbruchsicherung verwenden.

In vorteilhafter Weiterer Ausgestaltung der Erfindung ist
neben dem Ventilsitz ein Aufnahmekonus angeordnet. Die durch Ansteuern der Auslösestange aus dem Ventilsitz weggedrückte Ventilkugel wird mit Vorteil in diesen Aufnahmekonus aufgenommen. Die angedrückte Auslösestange hält dann die Ventilkugel im Aufnahmekonus fest, und das Fließmittel kann nun frei in der jeweiligen Durchflußrichtung strömen. Nimmt man den Steuerdruck von der Auslösestange ab, dann fällt die Ventilkugel selbsttätig mit der Strömung des Fließmittels wieder in einen der Ventilsitze und sperrt den entsprechenden Durchfluß.

Die Erfindung ist zweckmäßig weiter dadurch ausgestaltet, daß gegenüber dem einen Ventilsitz ein zweiter Ventilsitz angeordnet ist. Dadurch ist das oben erwähnte vorteilhafte Sperren und Öffnen im Vorlauf und auch im Rücklauf mit nur einer einzigen Ventilkugel gewährleistet. Bei angesteuerter Auslösestange können dann beide Durchflußöffnungen geöffnet sein, weil die Ventilkugel vom Ventilsitz in den Aufnahmekonus hineingedrückt ist. Vorzugsweise ist die Durchflußrichtung für das Fließmittel, d.h. die die beiden Ventilsitze miteinander verbindende Linie, unter einem Winkel von 20 bis 100°, vorzugsweise 90°, zur Längsachse der Auslösestange verdreht angeordnet. Man versteht, daß das neue Ventil aufgrund dessen mit einer sehr viel geringeren Auslösekraft geöffnet und geschlossen werden kann, als es bei den bisher bekannten Ventilen der Fall war.

Es kann ferner zweckmäßig sein, wenn erfindungsgemäß am Grund des Aufnahmekonus eine Bohrung für den Druckausgleich vorgesehen ist, damit sich nach der Entlastung der Auslösestange die Ventilkugel auch wieder aus dem Aufnahmekonus lösen kann und nicht durch den Druck des Fließmittels im Aufnahmekonus gehalten wird. Diese Bohrung am rückwärtigen Ende des Aufnahmekonus steht über geeignete Kanäle mit dem Raum in Verbindung, der mit Fließmittel gefüllt ist und durch die Gehäusewände einerseits und die dem Grund des Aufnahmekonus abgewendete Oberfläche der Ventilkugel andererseits gebildet wird.

Weitere Vorteile, Merkmale und Anwendungsmöglichkeiten der vorliegenden Erfindung ergeben sich aus der folgenden Beschreibung im Zusammenhang mit den Zeichnungen. Es zeigen:

Fig. 1 im Schnitt schematisch die Vorrichtung gemäß der Erfindung, bei welcher die Auslösestange nicht angesteuert, d.h. nicht mit Druck beaufschlagt ist, und sich die Ventilkugel auf einem Ventilsitz befindet,

Fig. 2 die gleiche Ansicht wie in Fig. 1, wobei sich die Ventilkugel auf dem anderen Ventilsitz befindet, und

Fig. 3 die gleiche Ansicht wie in Fig. 1, wobei jedoch die Auslösestange mit Druck beaufschlagt, d.h. angesteuert ist, und die Ventilkugel sich im Aufnahmekonus befindet.

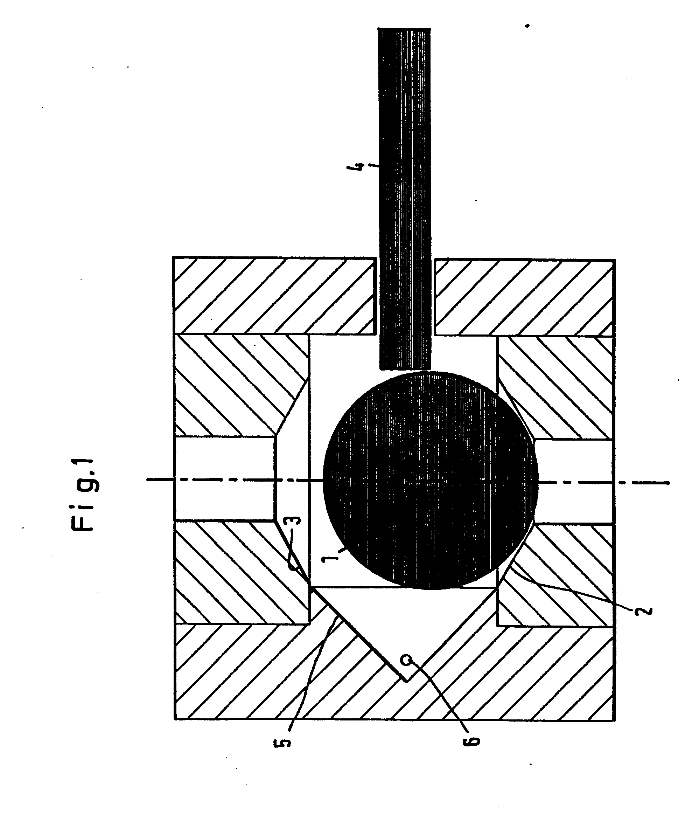

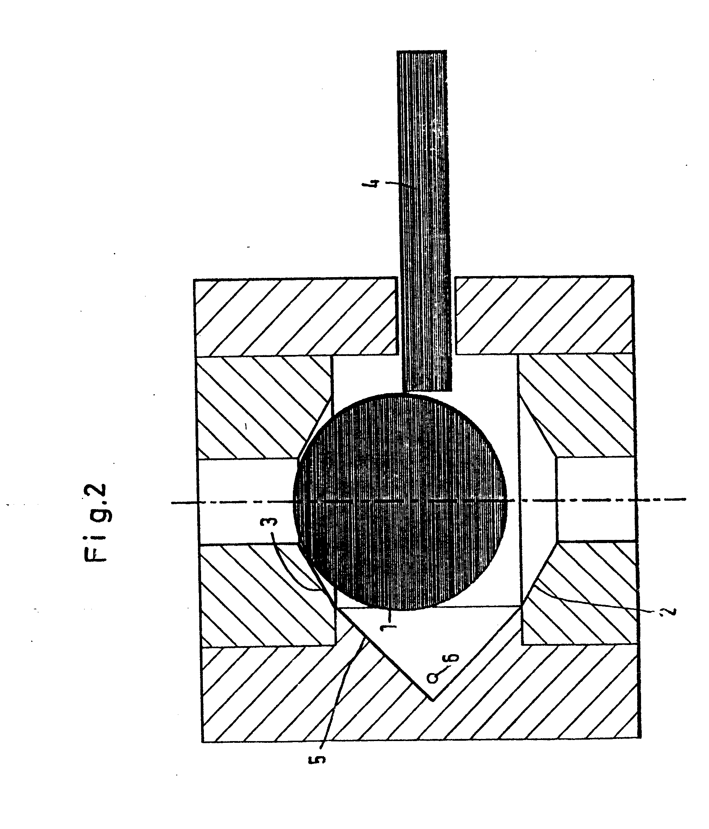

In den Fig. 1 bis 3 ist schematisch im Schnitt der wesentliche Teil der Vorrichtung zum Sperren bzw. Freigeben des Durchflusses eines Fließmittels gezeigt. Man erkennt die Ventilkugel 1, die gemäß Fig. 1 in einem kegelförmigen Ventilsitz 2 zur Anlage gebracht ist, während sie gemäß Fig. 2 auf dem kegelförmigen Ventilsitz 3 liegt. In beiden Fällen ist die nicht dargestellte Magnetspule nicht erregt, d.h. die Auslösestange 4 ist nicht angesteuert und übt in ihrer Längsrichtung nicht eine Kraft aus.

In den Fig. 1 bis 3 ist mit einer strichpunktierten Linie von oben nach unten, welche durch den Mittelpunkt der Ventilkugel 1 hindurchgeht, diejenige Verbindungslinie gezeigt, welche durch die Achsen der beiden Ventilsitze 2, 3 hindurchgeht bzw. diese beiden Ventilsitze miteinander verbindet. Man erkennt auch, daß die Längsachse der Auslösestange 4 unter 90° zu dieser strichpunktierten Verbindungslinie angeordnet ist.

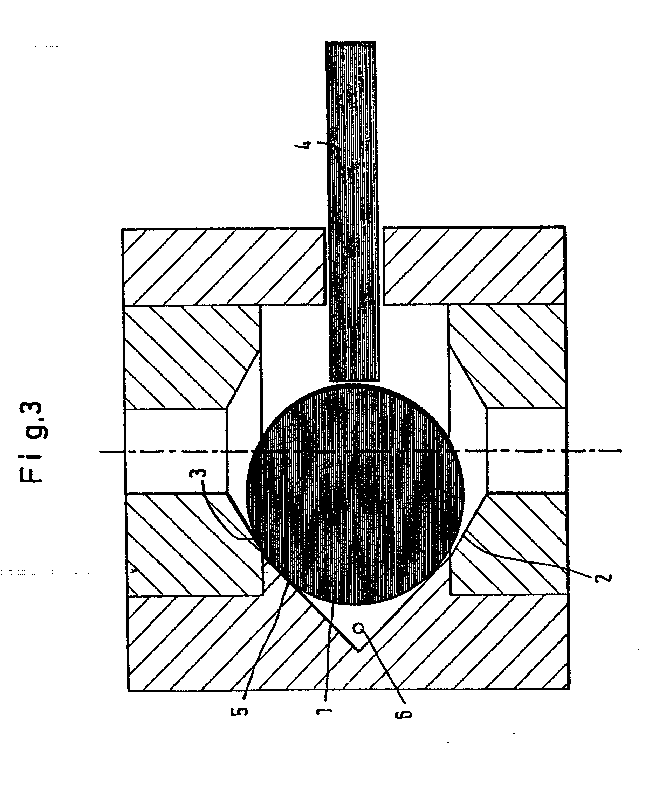

Auf der der Auslösestange 4 gegenüberliegenden Seite der Ventilkugel 1 ist im Gehäuse ein Aufnahmekonus 5 angeordnet, an dessen Grund eine Bohrung 6 gezeigt ist, die durch nicht dargestellte Leitungen mit dem Raum rechts von der Ventilkugel, wenn sie sich im Zustand der Fig. 3 befindet, in Verbindung steht. Dadurch ist ein Druckausgleich zwischen dem genannten Raum rechts von der Ventilkugel 1 in Fig. 3, der vom Fließmedium durchströmt sein kann, gegeben, damit sich in dem Raum links von der Ventilkugel im Zustand der Fig. 3, d.h. am Grund des Aufnahmekonus 5, nicht etwa ein Unterdruck entwickeln kann, welcher die Ventilkugel 1 auch dann im Aufnahmekonus 5 zurückhält, wenn die Auslösestange 4 bereits wieder in die Stellung nach den Fig. 1 und 2 zurückgezogen ist.

Im Betrieb tritt gemäß Fig. 1 Fließmittel mit Druck durch die Öffnung oben, d.h. aus dem Ventilsitz 3, aus. Die Ventilkugel 1 wird dadurch in Strömungsrichtung getrieben und auf den gegenüberliegenden Ventilsitz 2 aufgesetzt. Dadurch wird das Ventil gemäß der Erfindung gesperrt. Die Verhältnisse sind umgekehrt, wenn das Fließmittel von unten nach oben strömt, d.h. aus dem Ventilsitz 2 austritt. Dann wird die Ventilkugel 1 auf den Ventilsitz 3 gedrückt, und das Ventil sperrt wieder, wie in Fig. 2 gezeigt ist.

Wünscht man eine Freigabe des Durchflusses von unten nach oben, d.h. ein Strömen des Fließmittels vom Ventilsitz 2 durch den Ventilsitz 3, dann wird durch Ansteuern der Auslösestange 4 diese gemäß Fig. 3 nach links gedrückt. Sie schiebt dabei die Ventilkugel 1 ebenfalls nach links, die hierdurch ihrerseits vom jeweiligen Ventilsitz 2 oder 3 abgehoben wird und in den Aufnahmekonus 5 hineinfährt. Die Bewegung der Ventilkugel 1 erfolgt also zum Öffnen des Durchflusses durch eine seitliche Verschiebung entlang des Ventilsitzes 2, 3 mittels der Auslösestange 4. Diese wird von Hand, hydraulisch, elektromagnetisch oder pneumatisch bewegt. Dadurch werden etwa nur 20 % derjenigen Kraft aufzuwenden sein, die zum direkten Herausheben der Ventilkugel aus dem Ventilsitz - z.B. bei bekannten Ventilen - erforderlich wäre.

0008702

Die Auslösestange 4 kann im Zustand der Fig. 3 unter Andruck gehalten werden, so daß sie auch die Ventilkugel 1
in dem Aufnahmekonus 5 festhält. Je nach der Durchflußrichtung fällt bei Rückzug der Auslösestange 4 die Ventilkugel 1 mit der Strömung des Fließmittels wieder in den
Ventilsitz 2 bzw. 3 herunter und sperrt hierdurch den
Durchfluß.

Patentansprüche

1. Vorrichtung zur Sperrung bzw. Freigabe des Durchflusses eines gasförmigen oder flüssigen Mediums mittels einer Ventilkugel, die sich in einem kegel- oder kugelförmigen Ventilsitz befindet und von einer Auslösestange relativ zum Ventilsitz bewegbar ist, dadurch gekennzeichnet, daß die Längsachse der Auslösestange (4) unter einem Winkel im Bereich von etwa 20$^{O}$ bis 100$^{O}$ zur Durchflußrichtung des fließfähigen Mediums angeordnet ist.

2. Vorrichtung nach Anspruch 1, dadurch gekennzeichnet, daß der Winkel vorzugsweise 90$^{O}$ beträgt.

3. Vorrichtung nach Anspruch 1 oder 2, dadurch gekennzeichnet, daß neben dem Ventilsitz (2, 3) ein Aufnahmekonus (5) angeordnet ist.

4. Vorrichtungnach einem der Ansprüche 1 bis 3, dadurch gekennzeichnet, daß gegenüber dem einen Ventilsitz (2) ein zweiter Ventilsitz (3) angeordnet ist.

5. Vorrichtung zur Sperrung bzw. Freigabe des Durchflusses eines gasförmigen oder flüssigen Mediums mittels einer Ventilkugel (1), die sich in einem kegel- oder kugelförmigen Ventilsitz (2, 3) befindet. Die Bewegung der Ventilkugel (1) zur Öffnung des Durchflusses erfolgt durch eine seitliche Verschiebung entlang des Ventilsitzes (2, 3) mittels einer Stange (4), die von Hand, hydraulisch, elektromagnetisch oder pneumatisch bewegt wird. Dadurch werden etwa 20 % der Kraft aufgewendet, die zum direkten Herausheben der Ventilkugel aus dem Ventilsitz erforderlich ist.

6. Vorrichtung nach Anspruch 5, dadurch gekennzeichnet, daß die über den Ventilsitz (2, 3) weggedrückte Ventilkugel (1) in einem Konus aufgenommen wird. Die angedrückte Stange (4) entsprechend Fig. 3 hält die Ventilkugel (1) in dem Konus (5) fest, das Medium kann jetzt entsprechend der Durchflußrichtung frei strömen. Bei Rückgang der Stange (4) fällt die Ventilkugel (1) mit der Strömung des Mediums wieder in den Ventilsitz (2 oder 3) und sperrt den Durchfluß.

7. Vorrichtung nach Anspruch 5 und 6, dadurch gekennzeichnet, daß gegenüber dem Ventilsitz (2) ein zweiter Ventilsitz (3) angeordnet ist. Die Ventilkugel (1) bewegt sich mit der jeweiligen Strömungsrichtung des Mediums und verhindert so den Durchgang nach der jeweils einen oder anderen Seite. Durch Anordnung nach Anspruch 6 eines Aufnahmekonus (5) für die Ventilkugel (1) wird nach Andrücken der Stange (4) die Ventilkugel (1) aus dem Ventilsitz (2 oder 3) in den Konus (5) gedrückt und gibt dadurch den Durchfluß frei.

8. Vorrichtung nach Anspruch 6, dadurch gekennzeichnet, daß die konusförmige Aufnahme (5) für den Ventilkugel (1) mit einer Bohrung (6) bzw. einem Druckausgleich versehen ist, damit sich nach der Entlastung der Stange (4) die Ventilkugel (1) wieder aus dem Konus (5) lösen kann und nicht durch den Druck des Mediums in dem Konus gehalten wird.

Fig.1

Fig.2

# Fi g.3

Europäisches
Patentamt

**EUROPÄISCHER RECHERCHENBERICHT**

| | EINSCHLÄGIGE DOKUMENTE | | | KLASSIFIKATION DER ANMELDUNG (Int.Cl. ³) |
|---|---|---|---|---|
| Kategorie | Kennzeichnung des Dokuments mit Angabe, soweit erforderlich, der maßgeblichen Teile | betrifft Anspruch | | |
| X | US - A - 3 305 212 (BEACH)<br>* Spalte 1, Zeile 54 - Spalte 2, Zeile 51 * | 1-3, 5,6 | | F 16 K  1/14 |
| X | FR - A - 1 371 834 (VALLOUREC)<br>* Seite 1, Zeile 75 - Seite 3, Zeile 87 * | 1,2,4, 5,7 | | |
| X | US - A - 2 942 618 (HODGES)<br>* Spalte 1, Zeile 56 - Spalte 4, Zeile 23 * | 1,2,4, 5,7 | | **RECHERCHIERTE SACHGEBIETE (Int. Cl. ³)**<br><br>F 16 K  1/00 |
| X | GB - A - 1 078 808 (JENSEN)<br>* Seite 1, Zeile 67 - Seite 2, Zeile 77 * | 1,5 | | |
| X | DE - B - 1 284 219 (TURNWALD)<br>* Spalte 1, Zeile 61 - Spalte 2, Zeile 32 * | 1,5 | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-11-1979 | VERELST |

EPA form 1503.1  06.78